# EUROPÄISCHE PATENTSCHRIFT

(11) **EP 3 743 612 B1**
(45) Veröffentlichungstag und Bekanntmachung des Hinweises auf die Patenterteilung: **23.06.2021**
(21) Anmeldenummer: 19704709.5
(22) Anmeldetag: 22.01.2019
(51) Int. Cl.: F02D 41/14, G01M 15/10, F02D 41/00

(54) **VERFAHREN UND VORRICHTUNG ZUR DRUCKREGELUNG DES VERBRENNUNGS- UND/ODER ABGASES EINER ARBEITSMASCHINE**
METHOD AND DEVICE FOR REGULATING THE PRESSURE OF THE COMBUSTION GAS AND/OR EXHAUST GAS OF A WORK MACHINE
PROCÉDÉ ET DISPOSITIF DE RÉGLAGE DE PRESSION DU GAZ DE COMBUSTION ET/OU D'ÉCHAPPEMENT D'UNE MACHINE DE TRAVAIL

(30) Priorität: 22.01.2018 AT 500462018
(43) Veröffentlichungstag der Anmeldung: 02.12.2020
(73) Patentinhaber: Kristl, Seibt & Co. Gesellschaft M.B.H., 8052 Graz (AT)
(72) Erfinder: BAUER, Robert, 8041 Graz (AT); HÖLZL, Stefan Lambert, 8010 Graz (AT); KRANAWETTER, Klemens, 8020 Graz (AT)
(74) Vertreter: Sonn & Partner Patentanwälte
(86) Internationale Anmeldenummer: PCT/AT2019/060022
(87) Internationale Veröffentlichungsnummer: WO 2019/140478

(56) Entgegenhaltungen:
- DE-A1-102011 107 876
- DE-B3-102015 203 636
- FR-A1- 2 919 388
- US-A- 5 417 109
- US-A1- 2003 084 712
- US-A1- 2016 161 322

## Beschreibung

Die Erfindung betrifft ein Verfahren zur Druckregelung des Verbrennungs- und/oder Abgases einer Arbeitsmaschine, insbesondere eines Verbrennungsmotors, wobei das Verbrennungsgas über eine Versorgungsleitung der Arbeitsmaschine zugeführt wird und über eine Abgasleitung abgeführt wird, wobei die Versorgungsleitung und/oder die Abgasleitung eine Regeleinrichtung aufweist, wobei die Regeleinrichtung einen druckgeregelten Abschnitt der Versorgungsleitung und/oder der Abgasleitung begrenzt. Weiters betrifft die Erfindung eine Vorrichtung zur Druckregelung des Verbrennungs- und/oder Abgases einer Arbeitsmaschine, vorzugsweise eines Verbrennungsmotors, besonders bevorzugt in einem Prüfstand, aufweisend eine Versorgungsleitung zum Zuführen von Verbrennungsgas zum Verbrennungsmotor mit einer Regeleinrichtung, vorzugsweise einer Regel- oder Drosselklappe, die einen druckgeregelten Abschnitt der Versorgungsleitung begrenzt, und/oder eine Abgasleitung zum Abführen von Abgas aus dem Verbrennungsmotor mit einer Regeleinrichtung, vorzugsweise einer Regel- oder Drosselklappe, die einen druckgeregelten Abschnitt der Abgasleitung begrenzt.

Es ist häufig notwendig das einer Arbeitsmaschine, insbesondere einem Verbrennungsmotor, zugeführte Verbrennungsgas bzw. abgeführte Abgas bezüglich des Drucks zu regeln, insbesondere beim Betrieb in einem Prüfstand. Dies ist besonders dann notwendig, wenn das Verbrennungsgas zusätzlich mit einem Hochdruckgebläse, einer Gasaufbereitungsstrecke, insbesondere einer Luftaufbereitungsstrecke, einem Abströmventil, einer Drosselklappe und einem Drucksensor konditioniert bzw. das Abgas mit einem Regelventil bzw. einer Drosselklappe und einem Gebläse geregelt wird. Dafür ist eine Vielzahl von Möglichkeiten bereits bekannt.

So zeigt die EP 1 600 622 B1 eine Vorrichtung zur Versorgung eines Verbrennungsmotors mit konditioniertem Verbrennungsgas mit einem Drucksensor zum Erfassen des Motoransaugdrucks, wobei eine dynamische Druckregelungseinheit mit einem Abströmventil zur Ableitung von überschüssigem Verbrennungsgas in der Versorgungs- bzw. Saugleitung des Verbrennungsmotors vorgesehen ist, wobei die dynamische Druckregelungseinheit in Abhängigkeit von dem vom Drucksensor erfassten Motoransaugdruck derart geregelt wird, dass der Druck des Verbrennungsgases beim Eintritt in den Verbrennungsmotor konstant ist.

Weiters offenbart die DE 40 15 818 C2 einen Prüfstand für Brennkraftmaschinen mit einer die benötigte Verbrennungsluft auf jeweils unabhängig von den Umgebungsbedingungen konstant vorgebbare Bedingungen aufbereitender und durch eine Zuluftleitung der Brennkraftmaschine fluidisch verbundener Zuluftanlage und einer Abgasanlage. Dabei weist die Abgasleitung vom Abgasstutzen der Brennkraftmaschine zur Abgasanalge einen vernachlässigbaren Strömungswiderstand auf. Weiters ist ein Regelventil in der Abgasleitung in Strömungsrichtung vor dem Gebläse vorgesehen, welches in dem in Strömungsrichtung davorliegenden Abschnitt der Abgasleitung einen mit dem Druck der zugeführten Verbrennungsluft übereinstimmenden Abgasdruck einregelt, wobei der in Strömungsrichtung dem Regelventil folgende Abschnitt der Abgasleitung durch das Gebläse auf einen dafür stets ausreichenden Unterdruck gehalten wird.

Die US 4,471,742 A zeigt ein Verfahren für ein Kraftstoffeinspritzungssteuerungssystem für einen Verbrennungsmotor, wobei ein Druck in einer Ansaugleitung des Verbrennungsmotors an einer Stelle stromabwärts eines Drosselventils mittels eines ersten und eines zweiten Drucksensormittels detektiert wird.

Die DE 10 2009 003 285 A1 zeigt ein Verfahren zur Diagnose von Drucksensoren einer Luftzuführung einer Brennkraftmaschine, wobei einem ersten Teilkanal ein erster Drucksensor, einem zweiten Teilkanal ein zweiter Drucksensor und einem Ansaugkanal ein dritter Drucksensor zugeordnet sind.

Die DE 10 2007 018 623 B3 offenbart ein Verfahren zur Funktionsprüfung eines Temperatursensors einer Brennkraftmaschine. Es kann ein erster Drucksensor zwischen einer Drosselklappe und einem Verdichter und ein zweiter Drucksensor stromabwärts des Verdichters im Ansaugtrakt angeordnet sein. Die Drucksensoren dienen der Ermittlung, ob sich die Brennkraftmaschine im Ladebetrieb oder im Nichtladebetrieb befindet.

Die GB 2493748 A zeigt eine Einheit um die Rotationsgeschwindigkeit eines Turboladers für einen Verbrennungsmotor abzuschätzen. Dabei kann in verschiedenen Abschnitten jeweils ein Drucksensor vorgesehen sein, mit deren Signalen die Rotationsgeschwindigkeit abgeschätzt werden soll.

Die FR 2 919 388 A1 zeigt ein Verfahren zur Regulierung einer Auslassventilposition basierend auf dem durchschnittlichen Druck von einem Auslasssensor.

Des Weiteren zeigt die EP 1 336 035 B1 ein Verfahren zur Versorgung einer Verbrennungsmaschine mit einer konstanten Menge an konditioniertem Verbrennungsgas, wobei von der Verbrennungsmaschine nicht benötigtes Verbrennungsgas an der Verbrennungsmaschine vorbeigeleitet und mit deren Abgas gemischt wird und das Verbrennungsgas-/Abgas-Gemisch hinter der Verbrennungsmaschine abgesaugt wird. Weiters wird zwischen dem konditionierten Verbrennungsgas und dem Abgas hinter der Verbrennungsmaschine ein Druckgefälle zwischen 0,3 und 5 mbar eingestellt. Die zu jedem Zeitpunkt bereitgestellte Verbrennungsgas-Menge an einer Verzweigstelle zur Verbrennungsmaschine bzw. einer Bypass-Leitung um die Verbrennungsmaschine beträgt zu jedem Zeitpunkt die vom Verbrennungsmotor maximal benötigte Menge, wobei das aktuell vom Verbrennungsmotor nicht benötigte Verbrennungsgas über die Bypass-Leitung am Verbrennungsmotor vorbeigeleitet wird.

Das offenbarte Verfahren erreicht zwar, dass der Massenstrom über die Regeleinrichtungen annähernd konstant ist, wodurch einerseits die Regelung dieser Regeleinrichtungen relativ einfach ist und andererseits die Klappen nie dicht schließen müssen. Allerdings weisen die vorgeschlagenen Methoden mehrere Nachteile auf. So sind Rückwirkungen von Druckpulsationen aus dem Abgaskanal in den Ansaugkanal bei Verwendung einer Bypass-Leitung möglich. Weiters ist bei Betriebspunkten des Verbrennungsmotors mit geringem Abgas-Massenstrom der Massenstrom durch die Bypass-Leitung groß, wodurch die Gefahr einer Durchmischung von Abgas und Verbrennungsgas im Abgaskanal gegeben ist. Dies ist insbesondere relevant, wenn Abgasanalysegeräte Proben aus dem Abgaskanal entnehmen. Des Weiteren kann der Verbrennungsmotor heißes Abgas aus dem Abgaskanal über die Bypass-Leitung ansaugen und so beschädigt bzw. sein Arbeitsablauf erheblich beeinträchtigt werden.

Auch die anderen im Stand der Technik offenbarten Verfahren und Vorrichtungen weisen einen oder mehrere Nachteile auf. Sofern die Druckregelung ohne Bypass-Leitung erfolgt, wie im Stand der Technik ebenfalls beschrieben, muss die jeweilige ansaug- und/ oder abgasseitige Regeleinrichtung bei dynamischen Änderungen des Verbrennungsmotors entsprechend rasch folgen. Dies ist aber aufgrund möglicher Resonanzen und Schwankungen mit den Methoden des Standes der Technik nur unzureichend möglich. Weiters ist es bei Betriebspunkten des Verbrennungsmotors mit geringem Massenstrom, beispielsweise im Leerlauf, notwendig, dass die Regeleinrichtungen entsprechend dicht sind, um den jeweiligen Druck aufbauen und halten zu können. Während ansaugseitig aufgrund der relativ niedrigen Temperatur des konditionierten Verbrennungsgases viele geeignete Materialien für eine dicht schließende Regeleinrichtung, insbesondere eine Klappe, zur Verfügung stehen, gestaltet sich dies abgasseitig aufgrund der hohen Abgastemperaturen deutlich schwieriger. Es kann sogar sein, dass man aus Robustheitsgründen abgasseitig eine nicht dicht schließende Klappe mit einer gewissen Leckage einsetzt, wobei dies dem Konstanthalten des Drucks nach den Methoden des Standes der Technik hinderlich ist.

Aufgabe der Erfindung ist somit, insbesondere die oben genannten Probleme zu beheben oder zu verringern und das Konstanthalten des Drucks im versorgungs- oder abgasseitigen Bereich einer Arbeitsmaschine, insbesondere eines Verbrennungsmotors, zu vereinfachen bzw. zu verbessern.

Dies wird erreicht durch ein Verfahren zur Druckregelung des Verbrennungs- und/oder Abgases einer Arbeitsmaschine nach Anspruch 1, d.h. dem Verfahren wie eingangs beschrieben, wobei im jeweils druckgeregelten Abschnitt der Druck an mehr als einer Stelle gemessen wird. Weiters wird dies erzielt durch eine Vorrichtung nach Anspruch 12, d.h. die Vorrichtung wie eingangs beschrieben, wobei der jeweilige druckgeregelte Abschnitt mehr als einen Drucksensor, vorzugsweise drei Drucksensoren, aufweist.

Prinzipiell wäre es vorteilhaft, den Druck in der Nähe der jeweiligen Regeleinrichtung zu messen, da sich Änderungen der Regeleinrichtung sofort auf den Druck nach der Regeleinrichtung auswirken. Allerdings bewirkt die Änderung der Einstellung der Regeleinrichtung nicht nur eine örtlich begrenzte Druckänderung, sondern auch eine Druckwelle, die sich mit der Schallgeschwindigkeit des Gases ausbreitet. Diese Druckwelle wird an der Arbeitsmaschine reflektiert und erreicht nach der doppelten Durchlaufzeit wieder die Regeleinrichtung bzw. den Drucksensor. Reagiert die Regelung auf diese Druckwelle mit einer Klappenänderung, wird durch die Regelung eine Schwingung angeregt, die der ersten oder einer höheren Resonanzfrequenz des druckgeregelten Abschnitts, z.B. eines Rohres, entspricht. Für ein 6 m langes, luftgefülltes Rohr bei Raumtemperatur kann die erste Resonanzfrequenz beispielsweise in etwa 29 Hz betragen.

Damit die Regelung diese Resonanzfrequenzen nicht anregt, gäbe es mehrere Möglichkeiten. So könnte man die Regelung derart langsam einstellen, dass sie bereits auf die erste Resonanzfrequenz nicht reagiert. Die bedeutet aber im Allgemeinen eine zu langsame Regeleinstellung. Weiters könnte man entsprechende Sperr- oder Kammfilter beim gemessenen Druckwert vorsehen. Dies bedeutet aber, dass man die genauen Resonanzfrequenzen kennen muss, die aber unter anderem von der Temperatur und der Rohrlänge abhängen. Des Weiteren könnte man einen Drucksensor in der Mitte des druckgeregelten Abschnitts verwenden, weil hier eine stehende Welle der ersten Resonanz einen Knoten aufweist. Dadurch ist die erste Resonanz am Drucksensor ausgelöscht und die Regelung kann entsprechend schärfer eingestellt werden, allerdings darf sie bereits auf die zweite Resonanzfrequenz nicht mehr reagieren. Eine dieser Möglichkeiten oder eine Kombination derselben können in dem erfindungsgemäßen Verfahren auch vorgesehen sein.

Durch die Messung des Drucks an mehr als einer Stelle können jedoch die Auswirkungen von Resonanzen, Schwankungen und Druckwellen auf die Druckmessung verringert oder weitgehend vermieden werden.

Insbesondere kann der druckgeregelte Abschnitt einen Abschnitt darstellen, innerhalb dessen stationär überall der gleiche Druck vorherrscht. Vorzugsweise befindet sich die mehr als eine Stelle, an der der Druck gemessen wird, bzw. der mehr als eine Drucksensor in derselben (insbesondere ununterbrochenen) Leitung, und/oder in einem Abschnitt, innerhalb dessen stationär überall im Wesentlichen der gleiche Druck vorherrscht bzw. vorherrschen würde, und/oder an Stellen, die direkt druckgekoppelt sind bzw. zwischen denen sich Druckwellen ungehindert ausbreiten können, und/oder an Stellen, an denen im Wesentlichen dieselben Luftströmungen vorbeiströmen. Sofern die Arbeitsmaschine mehr als eine Zylinderbank aufweist, weist vorzugsweise der druckgeregelte Abschnitt einer Zylinderbank, d.h. die Leitung, die Luft zu einer Zylinderbank führt, mehr als einen Drucksensor bzw. wird der Druck in dieser Leitung an mehr als einer Stelle gemessen. Vorteilhafterweise wird für der Druck an der mehr als einen Stelle jeweils mit gleichen Drucksensoren bzw. mit Drucksensoren mit im Wesentlichen der gleichen Auflösung innerhalb des zu messenden Druckbereichs gemessen.

Das Verfahren beinhaltet weiters, dass der Druck im jeweils druckgeregelten Abschnitt auf Grundlage eines gewichteten arithmetischen Mittelwerts der an mehreren Stellen im druckgeregelten Abschnitt gemessenen Drücke durch Regulieren der Regeleinrichtung eingestellt wird, wobei der Druck im jeweils druckgeregelten Abschnitt vorzugsweise im Wesentlichen konstant gehalten wird. Durch die Wahl spezieller Gewichte der jeweiligen Drucksensoren kann jene Resonanzfrequenz, die die Bandbreite der Regelung beschränkt, eine möglichst hohe sein, was bedeutet, dass die Regelung in möglichst kurzen Zeitintervallen erfolgen kann.

Bevorzugt erfolgt die Druckregelung im jeweiligen druckgeregelten Abschnitt auf Grundlage eines Zeitmittelwerts der gemessenen Drücke, wobei der Mittelwert über einen Zeitraum gebildet wird, der gleich oder größer ist als eine Periodendauer einer Resonanz einer stehenden Druckwelle im jeweiligen druckgeregelten Abschnitt und wobei vorzugsweise der Druck im jeweils druckgeregelten Abschnitt im Wesentlichen konstant gehalten wird. Die Bildung des Zeitmittelwertes erlaubt es, die eventuell noch relevanten Resonanzen, die von der Zahl der Drucksensoren abhängen, für die Einstellung der Regeleinrichtungen zu eliminieren.

In einer bevorzugten Ausführungsform wird der Druck im druckgeregelten Abschnitt an genau drei Stellen gemessen. Somit kann der Aufwand gering gehalten werden und dennoch weitgehende Eliminierung von Störfaktoren erreicht werden.

Besonders bevorzugt befindet sich bei der Messung an drei Stellen die erste Stelle in einem Anfangsbereich des jeweiligen druckgeregelten Abschnitts, die zweite Stelle im Wesentlichen in der Mitte des jeweiligen druckgeregelten Abschnitts und die dritte Stelle in einem Endbereich des jeweiligen druckgeregelten Abschnitts. Es hat sich gezeigt, dass diese Wahl vorteilhaft ist in der Auslöschung von Resonanzen. Vorzugsweise befindet sich der Anfangsbereich möglichst nahe am Anfang des jeweiligen druckgeregelten Abschnitts, also möglichst nahe an der Stelle, an der Abgas von der Arbeitsmaschine zugeführt wird, und/oder der Endbereich möglichst nahe am Ende des jeweiligen druckgeregelten Abschnitts, also möglichst nahe an der Regeleinrichtung. Für den druckgeregelten Abschnitt der Versorgungsleitung wird als Anfang insbesondere jene Stelle bezeichnet, an der der druckgeregelte Abschnitt mit der Regeleinrichtung der Versorgungsleitung verbunden ist. Für den druckgeregelten Abschnitt der Abgasleitung wird als Anfang insbesondere jene Stelle bezeichnet, an der der druckgeregelte Abschnitt mit der Arbeitsmaschine verbunden ist. Für den druckgeregelten Abschnitt der Versorgungsleitung wird als Ende insbesondere jene Stelle bezeichnet, an der der druckgeregelte Abschnitt mit der Arbeitsmaschine verbunden ist. Für den druckgeregelten Abschnitt der Abgasleitung wird als Ende insbesondere jene Stelle bezeichnet, an der der druckgeregelte Abschnitt mit der Regeleinrichtung der Versorgungsleitung verbunden ist. Bevorzugt erstreckt sich der Anfangsbereich vom Anfang des jeweiligen druckgeregelten Abschnitts bis zu einer Stelle, die weniger als 30 cm, besonders bevorzugt weniger als 10 cm von dieser Stelle entfernt ist und/oder der Endbereich von einer Stelle die weniger als 30 cm, besonders bevorzugt weniger als 10 cm vom Ende des jeweiligen druckgeregelten Abschnitts entfernt ist, und dem Ende des jeweiligen druckgeregelten Abschnitts.

Weiters besonders bevorzugt wird der Druck im jeweiligen druckgeregelten Abschnitt auf Grundlage eines arithmetischen Mittelwerts des Drucks an der ersten, zweiten und dritten Stelle eingestellt, wobei bei der Mittelwertbildung der Druck der ersten Stelle mit einem Viertel, der Druck der zweiten Stelle mit einem Halben und der Druck der dritten Stelle mit einem Viertel gewichtet wird. Durch die spezielle Wahl der Gewichte werden die erste, zweite und dritte Resonanz eliminiert. Erst die vierte Resonanz hat eine Auswirkung auf die Druckwelle, wobei diese beispielsweise bei einem 6 m langen, luftgefüllten Rohr bei Raumtemperatur deutlich über 100 Hz liegt, und somit auf die Druckregelung üblicherweise keine negativen Auswirkungen mehr hat. Vorzugsweise wird außerdem ein Zeitmittelwert über einen Zeitraum gebildet, der gleich oder größer ist als die Periodendauer der vierten Resonanz einer stehenden Druckwelle im jeweiligen druckgeregelten Abschnitt, wodurch die vierte und höhere Resonanzen nicht mehr die Messung beeinflussen.

In einer weiteren Variante des Verfahrens wird der Druck im jeweiligen druckgeregelten Abschnitt an fünf oder sieben Stellen gemessen, wodurch alle Resonanzen bis zur siebten bzw. neunten eliminiert werden könnten, beispielsweise durch geeignete Wahl der Stellen und/oder der Gewichtungen.

Es ist insbesondere vorteilhaft, wenn als Regeleinrichtung eine Drosselklappe und/oder ein Regelventil verwendet wird.

Die abgasseitige und die versorgungsgasseitige Regelung folgt prinzipiell ähnlichen Prinzipien. Es besteht aber ein wesentlicher Unterschied in den Resonanzfrequenzen. Während ansaugseitig die Temperatur aufgrund der üblicherweise vorgenommenen Konditionierung des Verbrennungsgases bekannt ist, kann sich die Temperatur des Abgases - abhängig vom Betriebspunkt der Arbeitsmaschine - schnell ändern, somit wäre eine Lösung mit Hilfe eines Sperr- oder Kammfilters abgasseitig wesentlich schwerer realisierbar. Nichtsdestoweniger können erfindungsgemäß sowohl versorgungs- als auch abgasseitig Sperr- oder Kammfilter im druckgeregelten Abschnitt vorgesehen sein.

Vorzugsweise wird mit einer ersten Gasfördereinrichtung, besonders bevorzugt einem Hochdruckgebläse, Verbrennungsgas, vorzugsweise Luft, in die Versorgungsleitung geblasen und ein Vordruck erzeugt und das Abgas in der Abgasleitung von einer zweiten Gasfördereinrichtung, besonders bevorzugt einem Gebläse, abgesaugt.

Weiters besonders bevorzugt wird das Verbrennungsgas in einer Gasaufbereitungsstrecke, z.B. einer Luftaufbereitungsstrecke, in Bezug auf die Temperatur und die Feuchtigkeit konditioniert und/oder mit einem Abströmventil wird der Vordruck reguliert und/oder von der Arbeitsmaschine nicht benötigtes Verbrennungsgas wird abgelassen. Auf diese Weise kann eine Konditionierung und möglichst genaue Einstellung der Parameter des Versorgungs- und Abgases erreicht werden.

Bei Betriebspunkten der Arbeitsmaschine mit geringem Massenstrom, beispielsweise im Leerlauf, müssen die Regeleinrichtungen entsprechend dicht sein, um den jeweils erforderlichen Druck aufbauen und halten zu können. Dies kann insbesondere abgasseitig, aufgrund der hohen Temperaturen, schwierig sein, und es kann aus Robustheitsgründen zweckmäßig sein, bewusst eine nicht dicht schließende Regeleinrichtung mit einer gewissen Leckage einzusetzen. Damit trotz Leckage der gewünscht abgasseitige Druck aufgestaut werden kann, muss ein, vorzugsweise kleiner zusätzlicher Massenstrom vor der Regeleinrichtung zugeführt werden. Es ist somit vorteilhaft, dass im druckgeregelten Abschnitt der Abgasleitung der Druck weiters durch einen Massenstrom aus einer Druckgasleitung geregelt, bevorzugt konstant gehalten wird, wobei der Massenstrom vorzugsweise von einer Hausdruckleitung, einer anderen Gasquelle, besonders bevorzugt einer Luftquelle, oder einem anderen Kompressor bereitgestellt wird. Dabei ist es von Vorteil, wenn der Massenstrom aus der Druckgasleitung mit einem händisch und/oder elektrisch zu betätigenden Ventil und/oder einer Drossel reguliert wird. Dabei ist es bevorzugt, dass das Gas mit einem Massenstrom zugeführt wird, der geringer ist als der Massenstrom des von im Maximalbetrieb der Arbeitsmaschine abgeführten Abgases, wobei der Massenstrom vorzugsweise weniger als 5 Prozent, besonders bevorzugt weniger als 10 Prozent des Massenstroms des von im Maximalbetrieb der Arbeitsmaschine abgeführten Abgases beträgt.

Da die Druckgasverbindung in Bezug auf den Massenstrom regelbar ist, kann in vorteilhafter Weise der zusätzliche Massenstrom bei zunehmendem Durchsatz durch die Arbeitsmaschine auch ganz abgeregelt werden.

Alternativ kann in einer bevorzugten Variante die ansaugseitige Gasfördereinrichtung zum Bereitstellen des Gases in der Druckgasleitung mitverwendet werden. Dabei wird über die Druckgasleitung Gas von einem Abschnitt der Versorgungsleitung vor der Regeleinrichtung der Versorgungsleitung zum druckgeregelten Abschnitt der Abgasleitung geführt, wobei der Massenstrom vorzugsweise mit einem Ventil und/oder einer Drossel in der Druckgasleitung geregelt wird und die Druckgasleitung vorzugsweise einen großen Strömungswiderstand hat. Zwischen der Versorgungsleitung vor dem druckgeregelten Abschnitt und dem druckgeregelten Abschnitt der Abgasleitung besteht bevorzugt ein Druckgefälle von zumindest 50 mbar, besonders bevorzugt von zumindest 100 mbar. Bevorzugt weist die Druckgasleitung einen entsprechend großen Strömungswiderstand auf, sodass der Massenstrom aus der Druckgasleitung trotz der hohen Druckdifferenz zwischen dem Anfang der Druckgasleitung und dem Druck des Abgases in der Abgasleitung, insbesondere als der Druck innerhalb des druckgeregelten Abschnitts, gering gehalten wird. Bevorzugt soll der Strömungswiderstand so groß sein, dass bei einer Druckdifferenz von mehr als 50 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Besonders bevorzugt soll der Strömungswiderstand so groß sein, dass bei einer Druckdifferenz von mehr als 100 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Es ist ebenfalls bevorzugt, wenn die Druckgasleitung einen entsprechend kleinen Durchmesser hat, sodass der Massenstrom aus der Druckgasleitung trotz der hohen Druckdifferenz gering gehalten wird, wobei der Durchmesser vorzugsweise so gering ist, dass die im Zusammenhang mit dem Strömungswiderstand erwähnten bevorzugten und besonders bevorzugten Eigenschaften erzielt werden. Es wird somit unter anderem das Problem einer Durchmischung von Abgas und Verbrennungsgas im Abgaskanal bei Betriebspunkten des Verbrennungsmotors mit geringem Abgas-Massenstrom behoben, da der Massenstrom über die Druckgasleitung wesentlich kleiner ist als bei einer Bypass-Leitung, die den druckgeregelten Abschnitt der Versorgungsleitung und jenen der Abgasleitung direkt verbindet. Bezugnehmend auf die erfindungsgemäße Vorrichtung weist die Versorgungsleitung vorteilhafterweise eine erste Gasfördereinrichtung, vorzugsweise ein Hochdruckgebläse, auf. Weiters vorzugsweise weist die Versorgungsleitung eine Gasaufbereitungsstrecke und/oder ein Abströmventil auf. Weiters vorteilhafterweise weist die Abgasleitung eine zweite Gasfördereinrichtung, vorzugsweise ein Gebläse, auf.

In einer bevorzugten Ausführungsform der Vorrichtung weist der druckgeregelte Abschnitt der Abgasleitung eine Druckgasleitung auf. Besonders bevorzugt weist die Druckgasleitung ein Ventil und/oder eine Drossel auf. Ebenfalls besonders bevorzugt weist die Druckgasleitung einen entsprechend großen Strömungswiderstand auf, sodass der Massenstrom aus der Druckgasleitung trotz der hohen Druckdifferenz zwischen dem Anfang der Druckgasleitung und dem Druck des Abgases in der Abgasleitung, insbesondere als der Druck innerhalb des druckgeregelten Abschnitts, gering gehalten wird. Bevorzugt soll der Strömungswiderstand so groß sein, dass bei einer Druckdifferenz von mehr als 50 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Besonders bevorzugt soll der Strömungswiderstand so groß sein, dass bei einer Druckdifferenz von mehr als 100 mbar der Massenstrom aus der Druckgasleitung in den druckgeregelten Abschnitt weniger als 10 Prozent, vorzugsweise weniger als 5 Prozent des von im Maximalbetrieb der Arbeitsmaschine abgeführten Abgases ist. Es ist ebenfalls bevorzugt, wenn die Druckgasleitung einen entsprechend kleinen Durchmesser hat, sodass der Massenstrom aus der Druckgasleitung trotz der hohen Druckdifferenz gering gehalten wird, wobei der Durchmesser vorzugsweise so gering ist, dass die im Zusammenhang mit dem Strömungswiderstand erwähnten bevorzugten und besonders bevorzugten Eigenschaften erzielt werden.

In einer weiteren bevorzugten Ausführungsform ist die Versorgungsleitung vor der Regeleinrichtung mit der Druckgasleitung verbunden. Dabei beträgt der Druckabfall über die Druckgasleitung vorzugsweise mehr als 50 mbar, besonders bevorzugt mehr als 100 mbar.

Die Erfindung wird nachstehend anhand von in den Zeichnungen dargestellten bevorzugten Ausführungsbeispielen, auf welche sie jedoch keinesfalls beschränkt sein soll, noch näher erläutert. Im Einzelnen zeigen in den Zeichnungen:
Fig. 1 eine bevorzugte Ausführungsform des versorgungsgasseitigen Teils der Vorrichtung zur Druckregelung des Verbrennungs- und/oder Abgases einer Arbeitsmaschine mit drei Drucksensoren;
Fig. 2 eine bevorzugte Ausführungsform des abgasseitigen Teils der Vorrichtung zur Druckregelung des Verbrennungs- und/oder Abgases einer Arbeitsmaschine mit drei Drucksensoren;
Fig. 3 eine bevorzugte Ausführungsform des abgasseitigen Teils der Vorrichtung zur Druckregelung des Verbrennungs- und/oder Abgases einer Arbeitsmaschine mit einer Druckgasleitung; und
Fig. 4 eine bevorzugte Ausführungsform der Vorrichtung zur Druckregelung des Versorgungs- und Abgases einer Arbeitsmaschine mit einer Druckgasleitung verbunden mit der Versorgungsgasleitung und mit einer Gasaufbereitungsstrecke.

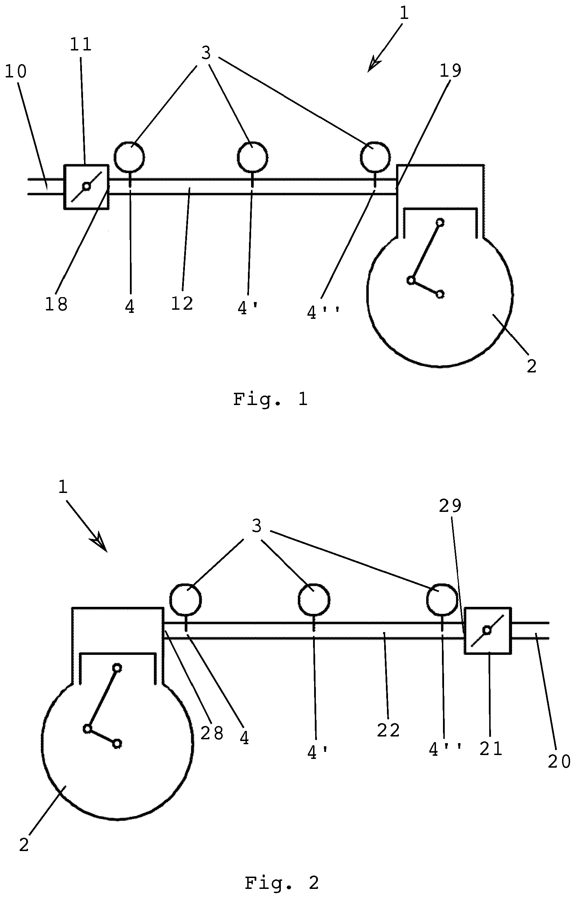

Fig. 1 zeigt eine Ausführungsform des versorgungsgasseitigen Teils der Vorrichtung 1 zur Druckregelung des Verbrennungs- und/oder Abgases einer Arbeitsmaschine 2. Dabei wird über eine Versorgungsgasleitung 10 Verbrennungsgas der Arbeitsmaschine 2 zugeführt. Dabei begrenzt eine versorgungsgasseitige Regeleinrichtung 11 einen druckgeregelten Abschnitt 12 der Versorgungsgasleitung 10. Der Druck wird an drei Stellen 4, 4', 4" des druckgeregelten Abschnitts 12 von Drucksensoren 3 gemessen. Dabei befindet sich eine erste Stelle 4 in einem Anfangsbereich des druckgeregelten Abschnitts 12, eine zweite Stelle 4' im Wesentlichen in der Mitte des druckgeregelten Abschnitts 12 und eine dritte Stelle 4" in einem Endbereich des druckgeregelten Abschnitts 12. Dabei ist die erste Stelle 4 vorzugsweise möglichst nahe am Anfang 18 des druckgeregelten Abschnitts und die dritte Stelle 4" möglichst nahe am Ende 19 des druckgeregelten Abschnitts.

Vorteilhafterweise wird der Druck im druckgeregelten Abschnitt 12 auf Grundlage eines arithmetischen Mittelwerts des Drucks an der ersten, zweiten und dritten Stelle 4, 4', 4" eingestellt, wobei bei der Mittelwertbildung der Druck der ersten Stelle 4 mit einem Viertel, der Druck der zweiten Stelle 4' mit einem Halben und der Druck der dritten Stelle 4" mit einem Viertel gewichtet wird und wobei ein Zeitmittelwert über einen Zeitraum gebildet wird, der gleich oder größer ist als die Periodendauer einer vierten Resonanz einer stehenden Druckwelle im druckgeregelten Abschnitt 12.

Fig. 2 zeigt eine Ausführungsform des abgasseitigen Teils der Vorrichtung 1 zur Druckregelung des Verbrennungs- und/oder Abgases einer Arbeitsmaschine 2. Dabei wird über eine Abgasleitung 20 Verbrennungsgas der Arbeitsmaschine 2 zugeführt. Dabei begrenzt eine abgasseitige Regeleinrichtung 21 einen druckgeregelten Abschnitt 22 der Abgasleitung 20. Die weitere Ausführung der Erfindung erfolgt wie im Zusammenhang mit Fig. 1 erläutert. Dabei ist die erste Stelle 4 vorzugsweise möglichst nahe am Anfang 28 des druckgeregelten Abschnitts und die dritte Stelle 4" möglichst nahe am Ende 29 des druckgeregelten Abschnitts.

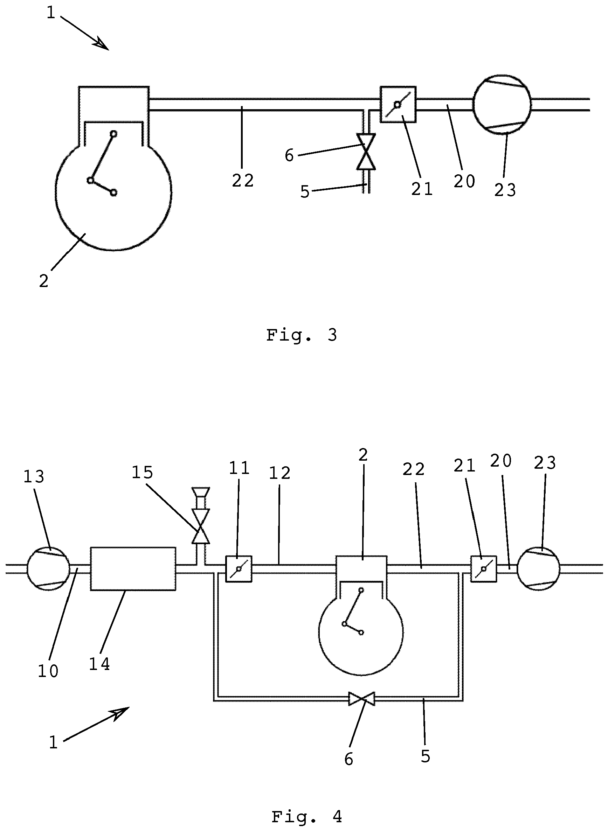

Fig. 3 zeigt eine bevorzugte Ausführungsform des abgasseitigen Teils der erfindungsgemäßen Vorrichtung 1, wobei wiederum das Abgas der Arbeitsmaschine 2 über die Abgasleitung 20 abgeführt wird, in der die Druckregelung anhand einer Druckmessung an mehreren Stellen 4, 4', 4" (nicht dargestellt) erfolgt. Weiters weist die Vorrichtung eine Druckgasleitung 5 mit einer Drossel oder einem Ventil 6 auf, wobei die Druckgasleitung 5 vorteilhafterweise einen großen Strömungswiderstand aufweist. Weiters weist die Abgasleitung 20 eine Gasfördereinrichtung 23, vorzugsweise ein Gebläse, auf, mit dem das Abgas abgesaugt wird. Die Druckgasleitung 5 befindet sich vorteilhafterweise möglichst nahe an der Regeleinrichtung 21. Über sie wird ein kleiner Gas-Massenstrom bereitgestellt, beispielsweise von einer Hausdruckleitung, einer anderen Gasquelle, besonders bevorzugt einer Luftquelle, oder einem anderen Kompressor, der dazu beiträgt, dass der Druck im druckgeregelten Abschnitt 22, gegebenenfalls trotz einer Leckage des Regeleinrichtung 21, im Wesentlichen konstant gehalten werden kann.

Fig. 4 zeigt eine bevorzugte Ausführungsform der erfindungsgemäßen Vorrichtung 1 zur Druckregelung des Verbrennungs- und/oder Abgases einer Arbeitsmaschine 2. Dabei weist die Versorgungsgasleitung 10 eine erste Gasfördereinrichtung 13, vorzugsweise ein Hochdruckgebläse, eine Gasaufbereitungsstrecke 14 und ein Abströmventil 15 auf. Die Gasfördereinrichtung 13 bläst Verbrennungsgas in die Versorgungsgasleitung 10, welches daraufhin in der Gasaufbereitungsstrecke 14 konditioniert wird. Über das Abströmventil 15 wird der Vordruck reguliert und von der Arbeitsmaschine 2 nicht benötigtes Verbrennungsgas abgelassen, bevor das Verbrennungsgas durch die Regeleinrichtung 11 der Versorgungsleitung 10 in den druckgeregelten Abschnitt 12 gelangt.

Die Abgasleitung 20 weist wiederum eine Regeleinrichtung 21, die einen druckgeregelten Abschnitt 22 begrenzt, und eine zweite Gasfördereinrichtung 23 auf. Eine Druckgasleitung 5, aufweisend eine Drossel oder ein Ventil 6, verbindet die Versorgungsleitung 10 vor der Regeleinrichtung 11 mit dem druckgeregelten Abschnitt 22 der Abgasleitung 20, wobei das Druckgefälle über die Druckgasleitung 5 vorzugsweise mehr als 50 mbar, besonders bevorzugt mehr als 100 mbar beträgt. Für den Verbindungspunkt der Druckgasleitung 5 mit der Versorgungsleitung 10 können dieselben vorteilhaften Anforderungen relativ zur Regeleinrichtung 11 der Versorgungsleitung 10 gelten, wie sie relativ zur Regeleinrichtung 21 der Abgasleitung 20 erwähnt wurden.

Über die Druckgasleitung 5 wird Gas von einem Abschnitt der Versorgungsleitung 10 vor der Regeleinrichtung 11 der Versorgungsgasleitung 10 zum druckgeregelten Abschnitt 22 der Abgasleitung 20 geführt, wobei der Massenstrom mit einem Ventil oder einer Drossel 6 in der Druckgasleitung 5 geregelt wird.

Die in den Figuren dargestellten und im Zusammenhang mit diesen erläuterten Ausführungsbeispiele dienen der Erläuterung der Erfindung und sind für diese nicht beschränkend.

## Patentansprüche

1. Verfahren zur Druckregelung des Verbrennungs- und/oder Abgases einer Arbeitsmaschine (2), insbesondere eines Verbrennungsmotors, wobei das Verbrennungsgas über eine Versorgungsleitung (10) der Arbeitsmaschine (2) zugeführt wird und über eine Abgasleitung (20) abgeführt wird, wobei die Versorgungsleitung (10) und/oder die Abgasleitung (20) eine Regeleinrichtung (11, 21) aufweist, wobei die Regeleinrichtung (11, 21) einen druckgeregelten Abschnitt (12, 22) der Versorgungsleitung (10) und/oder der Abgasleitung (20) begrenzt,
**dadurch gekennzeichnet, dass**
im jeweils druckgeregelten Abschnitt (12, 22) der Druck zur Verringerung der Auswirkungen von Resonanzen, Schwankungen und Druckwellen auf die Druckmessung an mehr als einer Stelle (14, 14', 14") gemessen wird, wobei der Druck im jeweils druckgeregelten Abschnitt (12, 22) auf Grundlage eines gewichteten arithmetischen Mittelwerts der an mehreren Stellen (14, 14', 14") im druckgeregelten Abschnitt (12, 22) gemessenen Drücke durch Regulieren der Regeleinrichtung (11, 21) eingestellt wird.

2. Verfahren nach Anspruch 1, **dadurch gekennzeichnet, dass** der Druck im jeweils druckgeregelten Abschnitt (12, 22) vorzugsweise im Wesentlichen konstant gehalten wird.

3. Verfahren nach einem der vorhergehenden Ansprüche, **dadurch gekennzeichnet, dass** die Druckregelung im jeweiligen druckgeregelten Abschnitt (12, 22) auf Grundlage eines Zeitmittelwerts der gemessenen Drücke erfolgt, wobei der Mittelwert über einen Zeitraum gebildet wird, der gleich oder größer ist als eine Periodendauer einer Resonanz einer stehenden Druckwelle im jeweiligen druckgeregelten Abschnitt (12, 22) und wobei vorzugsweise der Druck im jeweils druckgeregelten Abschnitt (12, 22) im Wesentlichen konstant gehalten wird.

4. Verfahren nach einem der vorhergehenden Ansprüche, **dadurch gekennzeichnet, dass** der Druck im druckgeregelten Abschnitt (12, 22) an genau drei Stellen (14, 14', 14'') gemessen wird.

5. Verfahren nach Anspruch 4, **dadurch gekennzeichnet, dass** sich die erste Stelle (14) in einem Anfangsbereich des jeweiligen druckgeregelten Abschnitts (12, 22), die zweite Stelle (14') im Wesentlichen in der Mitte des jeweiligen druckgeregelten Abschnitts (12, 22) und die dritte Stelle (14") in einem Endbereich des jeweiligen druckgeregelten Abschnitts (12, 22) befindet, wobei vorzugsweise
der Anfangsbereich sich von einem Anfang (18, 28) des druckgeregelten Abschnitts (12, 22) bis zu weniger als 30 cm, bevorzugt bis zu weniger als 10 cm vom Anfang (18, 28) des jeweiligen druckgeregelten Abschnitts entfernt erstreckt,
der Endbereich sich von einem Ende (19, 29) des jeweiligen druckgeregelten Abschnitts (12, 22) bis zu weniger als 30 cm, bevorzugt bis zu weniger als 10 cm von einem Ende (19, 29) des jeweiligen druckgeregelten Abschnitt (12, 22) entfernt erstreckt.

6. Verfahren nach Anspruch 5, **dadurch gekennzeichnet, dass** der Druck im jeweiligen druckgeregelten Abschnitt (12, 22) auf Grundlage eines arithmetischen Mittelwerts des Drucks an der ersten, zweiten und dritten Stelle (14, 14', 14") eingestellt wird, wobei bei der Mittelwertbildung der Druck der ersten Stelle (14) mit einem Viertel, der Druck der zweiten Stelle (14') mit einem Halben und der Druck der dritten Stelle (14'') mit einem Viertel gewichtet wird und wobei vorzugsweise ein Zeitmittelwert über einen Zeitraum gebildet wird, der gleich oder größer ist als die Periodendauer einer vierten Resonanz einer stehenden Druckwelle im jeweiligen druckgeregelten Abschnitt (12, 22).

7. Verfahren nach einem der Ansprüche 1 bis 3, **dadurch gekennzeichnet, dass** der Druck im jeweiligen druckgeregelten Abschnitt (12, 22) an fünf oder sieben Stellen gemessen wird.

8. Verfahren nach einem der vorhergehenden Ansprüche, **dadurch gekennzeichnet, dass** als Regeleinrichtung (11, 21) eine Drosselklappe und/oder ein Regelventil verwendet wird.

9. Verfahren nach einem der vorhergehenden Ansprüche, **dadurch gekennzeichnet, dass** mit einer ersten Gasfördereinrichtung (13), vorzugsweise einem Hochdruckgebläse, Verbrennungsgas, vorzugsweise Luft, in die Versorgungsleitung (10) geblasen und ein Vordruck erzeugt wird, dass vorzugsweise das Verbrennungsgas in einer Gasaufbereitungsstrecke (14) in Bezug auf die Temperatur und Feuchtigkeit konditioniert wird und vorzugsweise mit einem Abströmventil (15) der Vordruck reguliert wird und/oder von der Arbeitsmaschine (2) nicht benötigtes Verbrennungsgas abgelassen wird, bevor das Verbrennungsgas auf die Regeleinrichtung (22) der Abgasleitung (20) trifft und weiters, dass das Abgas in der Abgasleitung (20) von einer zweiten Gasfördereinrichtung (23), vorzugsweise einem Gebläse, abgesaugt wird.

10. Verfahren nach Anspruch 9, **dadurch gekennzeichnet, dass** im druckgeregelten Abschnitt (22) der Abgasleitung (20) der Druck weiters durch einen Massenstrom aus einer Druckgasleitung (5) geregelt, bevorzugt konstant gehalten wird, wobei der Massenstrom vorzugsweise von einer Hausdruckleitung, einer anderen Gasquelle, besonders bevorzugt einer Luftquelle, oder einem anderen Kompressor bereitgestellt wird, und wobei bevorzugt der Massenstrom aus der Druckgasleitung (5) mit einem händisch und/ oder elektrisch zu betätigenden Ventil und/oder einer Drossel (6) reguliert wird und/oder das Gas mit einem Massenstrom zugeführt wird, der geringer ist als der Massenstrom des von im Maximalbetrieb der Arbeitsmaschine (2) abgeführten Abgases, wobei der Massenstrom vorzugsweise weniger als 10 Prozent, besonders bevorzugt weniger als 5 Prozent des Massenstroms des von im Maximalbetrieb der Arbeitsmaschine (2) abgeführten Abgases beträgt.

11. Verfahren nach Anspruch 10, **dadurch gekennzeichnet, dass** über die Druckgasleitung (5) Gas von einem Abschnitt der Versorgungsleitung (10) vor der Regeleinrichtung (11) der Versorgungsleitung (10) zum druckgeregelten Abschnitt (22) der Abgasleitung (20) geführt wird, wobei die Druckgasleitung (5) vorzugsweise einen Strömungswiderstand aufweist, der im Wesentlichen oder zumindest so groß ist, dass bei einer Differenz des Drucks von am Anfang der Druckgasleitung (5) zugeführtem Gas und Druck des Abgases in der Abgasleitung (20), insbesondere im druckgeregelten Abschnitt (22), von mehr als 50 mbar, vorzugsweise mehr als 100 mbar, der Massenstrom aus der Druckgasleitung (5) in den druckgeregelten Abschnitt (22) weniger als 10 Prozent, vorzugsweise weniger als 5 Prozent des von im Maximalbetrieb der Arbeitsmaschine (2) abgeführten Abgases beträgt.

12. Vorrichtung (1) eingerichtet zur Durchführung des Verfahrens nach einem der Ansprüche 1 bis 11 zur Druckregelung des Verbrennungs- und/oder Abgases einer Arbeitsmaschine (2), vorzugsweise eines Verbrennungsmotors, besonders bevorzugt in einem Prüfstand, aufweisend
eine Versorgungsleitung (10) zum Zuführen von Verbrennungsgas zur Arbeitsmaschine (2) mit einer Regeleinrichtung (11), vorzugsweise einer Regel- oder Drosselklappe, die einen druckgeregelten Abschnitt (12) der Versorgungsleitung (10) begrenzt, und/oder
eine Abgasleitung (20) zum Abführen von Abgas aus der Arbeitsmaschine (2) mit einer Regeleinrichtung (21), vorzugsweise einer Regel- oder Drosselklappe, die einen druckgeregelten Abschnitt (22) der Abgasleitung (20) begrenzt,
**dadurch gekennzeichnet, dass**
der jeweilige druckgeregelte Abschnitt (12, 22) zur Verringerung der Auswirkungen von Resonanzen, Schwankungen und Druckwellen auf die Druckmessung mehr als einen Drucksensor (3), vorzugsweise drei Drucksensoren (3), aufweist.

13. Vorrichtung (1) nach Anspruch 12, **dadurch gekennzeichnet, dass** die Versorgungsleitung (10)
eine erste Gasfördereinrichtung (13), vorzugsweise ein Hochdruckgebläse,
vorzugsweise eine Gasaufbereitungsstrecke (14), und
vorzugsweise ein Abströmventil (15) aufweist,
und/oder die Abgasleitung (20) eine zweite Gasfördereinrichtung (23), vorzugsweise ein Gebläse, aufweist.

14. Vorrichtung (1) nach Anspruch 13, **dadurch gekennzeichnet, dass** der druckgeregelte Abschnitt (22) der Abgasleitung (20) eine Druckgasleitung (5) aufweist, wobei diese vorzugsweise
ein Ventil und/oder eine Drossel (6) aufweist und/oder
einen Strömungswiderstand aufweist, der im Wesentlichen oder zumindest so groß ist, dass bei einer Differenz des Drucks von am Anfang der Druckgasleitung (5) zugeführtem Gas und Druck des Abgases in der Abgasleitung (20), insbesondere im druckgeregelten Abschnitt (22), von mehr als 50 mbar, vorzugsweise mehr als 100 mbar, der Massenstrom aus der Druckgasleitung (5) in den druckgeregelten Abschnitt (22) weniger als 10 Prozent, vorzugsweise weniger als 5 Prozent des von im Maximalbetrieb der Arbeitsmaschine (2) abgeführten Abgases beträgt.

15. Vorrichtung (1) nach Anspruch 14, **dadurch gekennzeichnet, dass** die Versorgungsleitung (10) vor der Regeleinrichtung (11) mit der Druckgasleitung (5) verbunden ist, wobei der Druckabfall über die Druckgasleitung (5) vorzugsweise mehr als 50 mbar, besonders bevorzugt mehr als 100 mbar, beträgt.

## Claims

1. A method for regulating the pressure of the combustion gas and/or exhaust gas of a work machine (2), in particular of an internal combustion engine, the combustion gas being supplied to the work machine (2) via a supply line (10) and being discharged via an exhaust gas line (20), the supply line (10) and/or the exhaust gas line (20) having a regulating device (11, 21), the regulating device (11, 21) delimiting a pressure-regulated section (12, 22) of the supply line (10) and/or of the exhaust gas line (20),
**characterised in that**
in each pressure-regulated section (12, 22) the pressure is measured at more than one point (14, 14', 14'') in order to reduce the effects of resonances, fluctuations and pressure waves on the pressure measurement, the pressure in each pressure-regulated section (12, 22) being adjusted on the basis of a weighted arithmetic mean value of the pressures measured at a plurality of points (14, 14', 14'') in the pressure-regulated section (12, 22) by regulation of the regulating device (11, 21).

2. The method according to claim 1, **characterised in that** the pressure in each pressure-regulated section (12, 22) is preferably kept substantially constant.

3. The method according to either one of the preceding claims, **characterised in that** the pressure regulation in the pressure-regulated section (12, 22) in question is carried out on the basis of a time mean value of the measured pressures, the mean value being formed over a period of time which is equal to or greater than a period of a resonance of a standing pressure wave in the pressure-regulated section (12, 22) in question, and preferably the pressure in the pressure-regulated section (12, 22) in question being kept substantially constant.

4. The method according to any one of the preceding claims, **characterised in that** the pressure in the pressure-regulated section (12, 22) is measured at exactly three points (14, 14', 14'').

5. The method according to claim 4, **characterised in that** the first point (14) is situated in an initial area of the pressure-regulated section (12, 22) in question, the second point (14') is situated substantially in the middle of the pressure-regulated section (12, 22) in question, and the third point (14'') is situated in an end area of the pressure-regulated section (12, 22) in question, preferably
the initial area extending from the beginning (18, 28) of the pressure-regulated section (12, 22) up to less than 30 cm, preferably up to less than 10 cm from the beginning (18, 28) of the pressure-regulated section in question,
the end area extending from an end (19, 29) of the pressure-regulated section (12, 22) in question up to less than 30 cm, preferably up to less than 10 cm from an end (19, 29) of the pressure-regulated section (12, 22) in question.

6. The method according to claim 5, **characterised in that** the pressure in the pressure-regulated section (12, 22) in question is adjusted on the basis of an arithmetic mean value of the pressure at the first, second and third points (14, 14', 14"), the pressure of the first point (14) being weighted by a quarter, the pressure of the second point (14') by a half, and the pressure of the third point (14") by a quarter when forming the mean value, and preferably a time mean value being formed over a period of time which is equal to or greater than the period of a fourth resonance of a standing pressure wave in the pressure-regulated section (12, 22) in question.

7. The method according to any one of claims 1 to 3, **characterised in that** the pressure in the pressure-regulated section (12, 22) in question is measured at five or seven points.

8. The method according to any one of the preceding claims, **characterised in that** a throttle valve and/or a regulating valve is used as a regulating device (11, 21).

9. The method according to any one of the preceding claims, **characterised in that** combustion gas, preferably air, is blown into the supply line (10) with a first gas conveying device (13), preferably a high-pressure blower, and a primary pressure is generated, **in that** the combustion gas in a gas treatment section (14) is preferably conditioned with regard to temperature and moisture and the primary pressure is preferably regulated by means of a discharge valve (15) and/or combustion gas not required by the work machine (2) is discharged before the combustion gas reaches the regulating device (22) of the exhaust gas line (20), and furthermore in that the exhaust gas in the exhaust gas line (20) is discharged by a second gas conveying device (23), preferably a blower.

10. The method according to claim 9, **characterised in that** in the pressure-regulated section (22) of the exhaust gas line (20) the pressure is further regulated, preferably kept constant, by a mass flow from a compressed gas line (5), the mass flow preferably being provided by a domestic pressure line, another gas source, particularly preferably an air source, or another compressor, and the mass flow from the compressed gas line (5) preferably being regulated by a manually and/or electrically operated valve and/or a throttle (6) and/or the gas being supplied with a mass flow which is lower than the mass flow of the exhaust gas discharged from the work machine (2) in maximum operation, the mass flow preferably being less than 10 percent, particularly preferably less than 5 percent, of the mass flow of the exhaust gas discharged from the work machine (2) in maximum operation.

11. The method according to claim 10, **characterised in that** gas is fed via the compressed gas line (5) from a section of the supply gas line (10) upstream of the regulating device (11) of the supply line (10) to the pressure-regulated section (22) of the exhaust gas line (20), the compressed gas line (5) preferably having a flow resistance which is substantially or at least so large that, if the pressure of the gas supplied at the beginning of the compressed gas line (5) and the pressure of the exhaust gas in the exhaust gas line (20), in particular in the pressure-regulated section (22), differ by more than 50 mbar, preferably more than 100 mbar, the mass flow from the compressed gas line (5) into the pressure-regulated section (22) is less than 10 per cent, preferably less than 5 per cent, of the exhaust gas discharged from the work machine (2) during maximum operation.

12. A device (1) designed to carry out the method according to any one of claims 1 to 11 for regulating the pressure of the combustion gas and/or exhaust gas of a work machine (2), preferably of an internal combustion engine, particularly preferably in a test bench, comprising
a supply line (10) for supplying combustion gas to the work machine (2) with a regulating device (11), preferably a regulating or throttle valve, which delimits a pressure-regulated section (12) of the supply line (10), and/or
an exhaust gas line (20) for discharging exhaust gas from the work machine (2) with a regulating device (21), preferably a regulating or throttle valve, which delimits a pressure-regulated section (22) of the exhaust gas line (20),
**characterised in that**
each pressure-regulated section (12, 22) has more than one pressure sensor (3), preferably three pressure sensors (3), in order to reduce the effects of resonances, fluctuations and pressure waves on the pressure measurement.

13. The device (1) according to claim 12, **characterised in that** the supply line (10) has
a first gas conveying device (13), preferably a high-pressure blower,
preferably a gas treatment section (14), and
preferably an exhaust valve (15),
and/or the exhaust gas line (20) has a second gas conveying device (23), preferably a blower.

14. The device (1) according to claim 13, **characterised in that** the pressure-regulated section (22) of the exhaust gas line (20) has a compressed gas line (5), wherein this preferably has
a valve and/or a throttle (6) and/or
a flow resistance which is substantially or at least so large that, if the pressure between the gas supplied at the beginning of the compressed gas line (5) and the pressure of the exhaust gas in the exhaust gas line (20), in particular in the pressure-regulated section (22), differ by more than 50 mbar, preferably more than 100 mbar, the mass flow from the compressed gas line (5) into the pressure-regulated section (22) is less than 10 percent, preferably less than 5 percent, of the exhaust gas discharged from the work machine (2) during maximum operation.

15. The device (1) according to claim 14, **characterised in that** the supply line (10) is connected to the compressed gas line (5) upstream of the regulating device (11), the pressure drop across the compressed gas line (5) preferably being more than 50 mbar, particularly preferably more than 100 mbar.

## Revendications

1. Procédé de régulation de pression du gaz de combustion et/ou d'échappement d'un engin de travail (2), en particulier d'un moteur à combustion interne, dans lequel le gaz de combustion est amené à l'engin de travail (2) par l'intermédiaire d'un conduit d'alimentation (10) et est évacué par l'intermédiaire d'un conduit de gaz d'échappement (20), dans lequel le conduit d'alimentation (10) et/ou le conduit de gaz d'échappement (20) présentent un système de régulation (11, 21), dans lequel le système de régulation (11, 21) délimite une section (12, 22) à pression régulée du conduit d'alimentation (10) et/ou du conduit de gaz d'échappement (20),
**caractérisé en ce que**
la pression est mesurée dans la section (12, 22) à pression régulée respective, pour réduire les répercussions de résonances, de fluctuations et d'ondes de pression sur la mesure de pression, sur plus d'un emplacement (14, 14', 14"), la pression étant réglée en régulant le système de régulation (11, 21) dans la section (12, 22) à pression régulée respective sur la base d'une valeur moyenne arithmétique pondérée des pressions mesurées sur plusieurs emplacements (14, 14', 14") dans la section (12, 22) à pression régulée.

2. Procédé selon la revendication 1, **caractérisé en ce que** la pression est maintenue de préférence sensiblement constante dans la section (12, 22) à pression régulée respective.

3. Procédé selon l'une quelconque des revendications précédentes, **caractérisé en ce que** la régulation de pression est effectuée dans la section (12, 22) à pression régulée respective sur la base d'une valeur moyenne de temps des pressions mesurées, dans lequel la valeur moyenne est obtenue sur une période de temps qui est égale ou supérieure à une durée de période d'une résonance d'une onde de pression stationnaire dans la section (12, 22) à pression régulée respective et dans lequel de préférence la pression est maintenue sensiblement constante dans la section (12, 22) à pression régulée respective.

4. Procédé selon l'une quelconque des revendications précédentes, **caractérisé en ce que** la pression est mesurée dans la section (12, 22) à pression régulée sur précisément trois emplacements (14, 14', 14").

5. Procédé selon la revendication 4, **caractérisé en ce que** le premier emplacement (14) se trouve dans une zone de début de la section (12, 22) à pression régulée respective, le deuxième emplacement (14') se trouve sensiblement au centre de la section (12, 22) à pression régulée respective et le troisième emplacement (14") se trouve dans une zone de fin de la section (12, 22) à pression régulée respective, dans lequel de préférence
la zone de début s'étend d'un début (18, 28) de la section (12, 22) à pression régulée jusqu'à moins de 30 cm, de manière préférée jusqu'à moins de 10 cm du début (18, 28) de la section à pression régulée respective,
la zone de fin s'étend d'une fin (19, 29) de la section (12, 22) à pression régulée respective jusqu'à moins de 30 cm, de manière préférée jusqu'à moins de 10 cm d'une fin (19, 29) de la section (12, 22) à pression régulée respective.

6. Procédé selon la revendication 5, **caractérisé en ce que** la pression est réglée dans la section (12, 22) à pression régulée respective sur la base d'une valeur moyenne arithmétique de la pression sur le premier, le deuxième et le troisième emplacement (14, 14', 14"), dans lequel lors de l'obtention de valeur moyenne, la pression du premier emplacement (14) est pondérée avec un quart, la pression du deuxième emplacement (14') est pondérée avec une moitié et la pression du troisième emplacement (14") est pondérée avec un quart et dans lequel de préférence une valeur moyenne de temps est obtenue sur une période qui est égale ou supérieure à la durée de période d'une quatrième résonance d'une onde de pression stationnaire dans la section (12, 22) à pression régulée respective.

7. Procédé selon l'une quelconque des revendications 1 à 3, **caractérisé en ce que** la pression dans la section (12, 22) à pression régulée respective est mesurée sur cinq ou sept emplacements.

8. Procédé selon l'une quelconque des revendications précédentes, **caractérisé en ce qu'**un clapet d'étranglement et/ou une soupape de régulation sont utilisés en tant que système de régulation (11, 21).

9. Procédé selon l'une quelconque des revendications précédentes, **caractérisé en ce que** du gaz de combustion, de préférence de l'air, est soufflé dans le conduit d'alimentation (10) et une pression préalable est générée avec un premier système de refoulement de gaz (13), de préférence une soufflante haute pression, que de préférence le gaz de combustion est conditionné dans un tronçon de préparation de gaz (14) en ce qui concerne la température et l'humidité, et la pression préalable est régulée de préférence avec une soupape d'évacuation (15) et/ou du gaz de combustion dont l'engin de travail (2) n'a pas besoin est évacué avant que le gaz de combustion n'atteigne le système de régulation (22) du conduit de gaz d'échappement (20), et par ailleurs que le gaz d'échappement dans le conduit de gaz d'échappement (20) est évacué par aspiration par un deuxième système de refoulement de gaz (23), de préférence une soufflante.

10. Procédé selon la revendication 9, **caractérisé en ce que** la pression est régulée, de manière préférée est maintenue constante, dans la section (22) à pression régulée du conduit de gaz d'échappement (20) par un débit massique provenant d'un conduit de gaz comprimé (5), dans lequel le débit massique est fourni de préférence par un conduit de pression domestique, une autre source de gaz, de manière particulièrement préférée une source d'air ou un autre compresseur, et dans lequel de manière préférée le débit massique provenant du conduit de gaz comprimé (5) est régulé avec une soupape à actionner manuellement et/ou électriquement et/ou un étranglement (6) et/ou le gaz est amené avec un débit massique qui est inférieur au débit massique du gaz d'échappement évacué dans le mode de fonctionnement maximal de l'engin de travail (2), dans lequel le débit massique est de préférence inférieur à 10 pour cent, de manière particulièrement préférée inférieur à 5 pour cent du débit massique du gaz d'échappement évacué dans le mode de fonctionnement maximal de l'engin de travail (2).

11. Procédé selon la revendication 10, **caractérisé en ce que** du gaz est guidé par l'intermédiaire du conduit de gaz comprimé (5) depuis une section du conduit d'alimentation (10) devant le système de régulation (11) du conduit d'alimentation (10) vers la section (22) à pression régulée du conduit de gaz d'échappement (20), dans lequel le conduit de gaz d'échappement (5) présente de préférence une résistance à l'écoulement qui est sensiblement ou du moins si importante que dans le cas d'une différence de la pression par rapport au gaz amené au début du conduit de gaz comprimé (5) et à la pression du gaz d'échappement dans le conduit de gaz d'échappement (20), en particulier dans la section (22) à pression régulée, de plus de 50 mbar, de préférence de plus de 100 mbar, le débit massique provenant du conduit de gaz comprimé (5) dans la section (22) à pression régulée est inférieur à 10 pour cent, de préférence est inférieur à 5 pour cent du gaz d'échappement évacué dans le mode de fonctionnement maximal de l'engin de travail (2).

12. Dispositif (1) configuré pour mettre en œuvre le procédé selon l'une quelconque des revendications 1 à 11 pour la régulation de pression du gaz de combustion et/ou du gaz d'échappement d'un engin de travail (2), de préférence d'un moteur à combustion, de manière particulièrement préférée dans un banc d'essai, présentant un conduit d'alimentation (10) pour amener du gaz de combustion à l'engin de travail (2) avec un système de régulation (11), de préférence un clapet de régulation ou d'étranglement, qui délimite une section (12) à pression régulée du conduit d'alimentation (10),
et/ou
un conduit de gaz d'échappement (20) pour évacuer du gaz d'échappement hors de l'engin de travail (2) avec un système de régulation (21), de préférence un clapet de régulation ou d'étranglement, qui délimite une section (22) à pression régulée du conduit de gaz d'échappement (20),
**caractérisé en ce que**
la section (12, 22) à pression régulée respective présente, pour réduire les répercussions de résonances, de fluctuations et d'ondes de pression sur la mesure de pression, plus d'un capteur de pression (3), de préférence trois capteurs de pression (3).

13. Dispositif (1) selon la revendication 12, **caractérisé en ce que** le conduit d'alimentation (10) présente
un premier système de refoulement de gaz (13), de préférence une soufflante haute pression,
de préférence un tronçon de préparation de gaz (14), et
de préférence une soupape d'évacuation (15),
et/ou le conduit de gaz d'échappement (20) présente un deuxième système de refoulement de gaz (23), de préférence une soufflante.

14. Dispositif (1) selon la revendication 13, **caractérisé en ce que** la section (22) à pression régulée du conduit de gaz d'échappement (20) présente un conduit de gaz comprimé (5), dans lequel celui-ci présente de préférence une soupape et/ou un étranglement (6), et/ou
présente une résistance à l'écoulement qui est sensiblement ou du moins si importante que dans le cas d'une différence de la pression par rapport à du gaz amené au début du conduit de gaz comprimé (5) et à la pression du gaz d'échappement dans le conduit de gaz d'échappement (20), en particulier dans la section (22) à pression régulée, de plus de 50 mbar, de préférence de plus de 100 mbar, le débit massique provenant du conduit de gaz comprimé (5) dans la section (22) à pression régulée est inférieur à 10 pour cent, de préférence est inférieur à 5 pour cent du gaz d'échappement évacué dans le mode de fonctionnement maximal de l'engin de travail (2).

15. Dispositif (1) selon la revendication 14, **caractérisé en ce que** le conduit d'alimentation (10) est relié devant le système de régulation (11) au conduit de gaz comprimé (5), dans lequel la chute de pression sur le conduit de gaz comprimé (5) est de préférence supérieure à 50 mbar, de manière particulièrement préférée supérieure à 100 mbar.
